# FASCICULE DE BREVET EUROPEEN

(11) **EP 2 368 192 B1**
(45) Date de publication et mention de la délivrance du brevet: **24.10.2012**
(21) Numéro de dépôt: 09803832.6
(22) Date de dépôt: 10.12.2009
(51) Int. Cl.: G06F 13/42

(54) **TRANSMISSION SUR BUS I2C**
ÜBERTRAGUNG ÜBER DEN I2C-BUS
TRANSMISSION OVER I2C BUS

(30) Priorité: 17.12.2008 FR 0858732
(43) Date de publication de la demande: 28.09.2011
(73) Titulaire: ST Microelectronics (Rousset) SAS, 13790 Rousset (FR)
(72) Inventeur: TAILLIET, François, F-13710 Fuveau (FR)
(74) Mandataire: de Beaumont, Michel
(86) Numéro de dépôt international: PCT/FR2009/052480
(87) Numéro de publication internationale: WO 2010/076455

(56) Documents cités:
- US-A1- 2008 162 758
- ANONYMOUS: "The I2C specification 2.1" N/A,, 1 janvier 2000 (2000-01-01), XP030001520

## Description

### Domaine de l'invention

La présente invention concerne de façon générale les circuits électroniques et, plus particulièrement, les systèmes dans lesquels plusieurs circuits sont susceptibles de communiquer sur un bus bifilaire comportant un fil de transmission de données et un fil véhiculant un signal de synchronisation. L'invention s'applique plus particulièrement à un bus I2C.

### Exposé de l'art antérieur

Les protocoles de communication sur bus bifilaire utilisent, outre un signal de référence (généralement la masse) représentant l'un des deux états des signaux binaires, un signal de données (SDA) et un signal d'horloge ou de synchronisation (SCL). On parle donc de bus bifilaire mais un niveau de référence est en outre requis.

Un exemple courant est le protocole I2C, utilisé pour communiquer entre un dispositif ou circuit maître qui génère le signal de synchronisation sur le fil d'horloge ainsi qu'un signal de données sur le fil de données à destination d'un dispositif ou circuit esclave. Le dispositif esclave (récepteur) génère un bit d'accusé réception qu'il transmet sur le fil de données. En pratique, les conducteurs du bus sont, au repos, à un potentiel différent du potentiel de référence, ce deuxième potentiel représentant l'autre des deux états des signaux binaires.

Il serait souhaitable de pouvoir profiter de la présence d'un bus I2C pour transmettre d'autres données que celles du protocole I2C. En d'autres termes, il serait souhaitable d'utiliser la structure d'un bus bifilaire pour un autre canal de communication.

### Résumé de l'invention

Un objet de la présente invention est de proposer une transmission multi-canal sur un bus bifilaire.

Un autre objet est de proposer une solution simple à mettre en oeuvre et compatible avec les architectures usuelles des systèmes I2C.

Pour atteindre tout ou partie de ces objets ainsi que d'autres, il est prévu un procédé de transmission multi-canal sur un bus bifilaire comportant un signal de données et un signal de synchronisation, des données d'un premier canal étant transmise par un codage d'état du signal de données pendant une période incluant un premier état du signal de synchronisation, des données d'un deuxième canal étant transmises par codage impulsionnel hors de ladite période.

Selon un mode de réalisation de la présente invention, un premier état du deuxième canal est codé par une impulsion, un deuxième état du deuxième canal étant codé par une absence d'impulsion.

Selon un mode de réalisation de la présente invention, le procédé est appliqué au protocole I2C.

Selon un mode de réalisation de la présente invention, ladite impulsion est générée pendant une période comprise entre un temps de maintien qui fait suite à un front d'un premier type du signal de synchronisation et un front d'un deuxième type qui suit.

Il est également prévu un système de transmission multi-canal sur un bus bifilaire, comportant :
des moyens de transmission d'un premier canal respectant le protocole I2C ; et
des moyens de transmission d'un deuxième canal impulsionnel hors de périodes où les données du protocole I2C sont stables.

Il est également prévu un émetteur de transmission multi-canal sur un bus bifilaire.

Il est également prévu un récepteur de transmission multi-canal sur un bus bifilaire.

Il est également prévu un émetteur-récepteur de transmission multi-canal sur un bus bifilaire.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente de façon très schématique et sous forme de blocs, un exemple de système utilisant un bus I2C ;
la figure 2 représente des chronogrammes illustrant le fonctionnement d'un bus I2C ;
la figure 3 est un schéma-blocs d'un mode de réalisation d'un circuit d'émission multi-canal sur un bus I2C ;
la figure 4 représente des chronogrammes illustrant une transmission multi-canal sur un bus I2C ;
la figure 5 est un schéma-blocs représentant un mode de réalisation d'un circuit de réception adapté au bus I2C multi-canal ; et
la figure 6 est un schéma blocs d'un exemple de circuit électronique intégrant les circuits d'émission et de réception multi-canal sur bus I2C.

De mêmes éléments ont été désignés par de mêmes références aux différentes figures.

### Description détaillée

Par souci de clarté, seuls les étapes et éléments utiles à la compréhension de l'invention ont été représentés et seront décrits. En particulier, la génération des données à transmettre et l'exploitation faite par le circuit de réception de ces données n'ont pas été détaillées, l'invention étant compatible avec les données habituellement transmises entre deux ou plusieurs circuits sur un bus bifilaire.

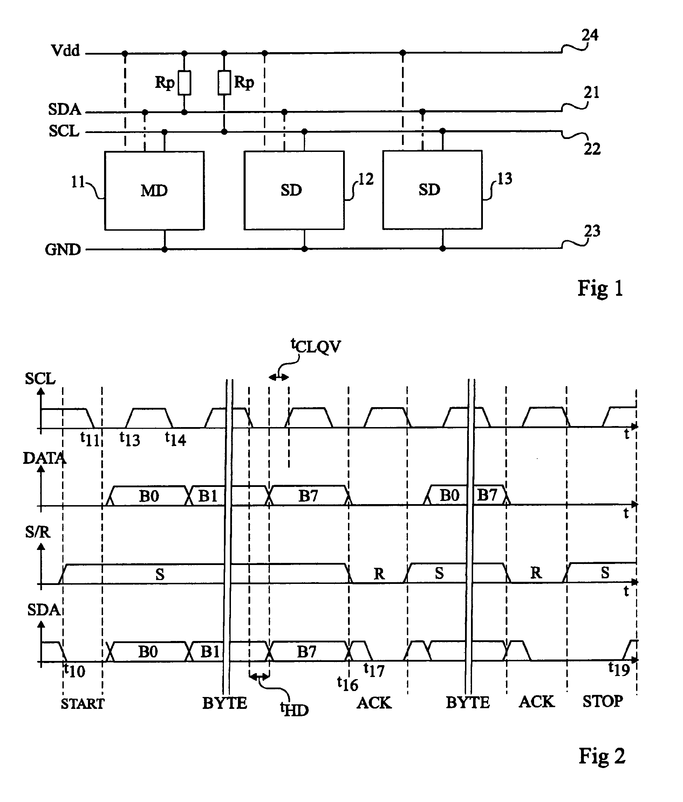

La figure 1 est une représentation schématique d'un dispositif ou système électronique exploitant un bus bifilaire, par exemple de type I2C. Plusieurs circuits 11, 12, 13 sont reliés à un fil 21 de transmission d'un signal de données SDA, à un fil 22 de transmission d'un signal de synchronisation ou d'horloge SCL, et à un fil 23 véhiculant un signal de référence de potentiel (typiquement la masse, GND). Les circuits 11, 12, 13 et autres circuits connectés au bus I2C ou appartenant au dispositif électronique peuvent être alimentés sous une même tension ou sous des tensions différentes. Par exemple, les circuits 11, 12 et 13 sont connectés à un fil 24 véhiculant un signal d'alimentation positif Vdd par rapport à la masse GND. Les fils 21 et 22 sont individuellement reliés par des résistances de tirage (pull-up) Rp au fil 24, de sorte que les signaux SDA et SCL sont au repos à l'état haut.

Pour une transmission de données sur le bus I2C, un des circuits (par exemple, le circuit 11) fait fonction de dispositif maître (MD) et impose le signal de synchronisation SCL. Le ou les autres circuits 12 et 13 ont alors le statut d'esclave (SD) pour recevoir les données transmises par le circuit 11. Ces données peuvent être à destination de plusieurs circuits esclaves ou d'un seul d'entre eux. Le protocole I2C prévoit de transmettre une adresse de dispositif avant un octet de données. Un même circuit peut tantôt avoir la fonction de maître et tantôt la fonction d'esclave en fonction du sens de communication.

La figure 2 représente des chronogrammes illustrant le fonctionnement d'un bus I2C. Ces chronogrammes représentent des exemples d'allure du signal SCL, d'un signal de données DATA à transmettre par un dispositif maître vers un ou plusieurs dispositifs esclave, d'un signal S/R interne au dispositif maître et du signal SDA. Dans l'exemple de la figure 2, on suppose un signal de synchronisation périodique et de rapport cyclique 1/2, ce qui n'est pas obligatoire.

Le protocole I2C définit un bit de début de communication (START) par une commutation vers l'état bas (instant t₁₀) du signal SDA alors que le signal SCL reste à l'état haut. Cette commutation est provoquée par celui des dispositifs qui prend le statut de maître pour la communication. Le dispositif maître commute alors le signal SCL au niveau bas (instant t₁₁). Puis, il impose l'état du signal SDA en fonction de l'état du premier bit B0 de l'octet à transmettre. L'état du signal SDA est validé par la période (instant t₁₃ à t₁₄) à l'état haut du signal SCL. Lorsque le signal SCL revient à l'état bas, le circuit maître continue l'opération avec les bits suivants B1, ... B7, jusqu'à transmission de l'octet complet.

A la fin du dernier bit B7 (instant t₁₆) du premier octet, le dispositif maître relâche le signal SDA qui revient donc à l'état haut, et positionne son port relié au fil 21 en lecture de l'état du signal SDA (signal S/R à l'état bas R).

Les différents circuits esclaves détectent le début d'une communication en surveillant les états respectifs des signaux SCL et SDA. Lorsque le signal SDA est tiré à l'état bas (instant t₁₀) alors que le signal SCL reste à l'état haut, les dispositifs esclaves savent qu'une transmission va débuter.

Le plus souvent, le premier octet envoyé par le dispositif maître comporte sept bits d'adresse identifiant le circuit destinataire, suivi d'un bit indicateur de l'opération (lecture-écriture) souhaité par le dispositif maître.

Les différents circuits esclaves détectent les données transmises et, notamment, déterminent à partir du premier octet constituant l'adresse du destinataire, si le ou les octets suivants leurs sont destinés.

A la fin du premier octet, le circuit esclave identifié par l'adresse accuse réception (ACK) de l'octet transmis en tirant le signal SDA à l'état bas. Cette transition (instant t₁₇) est détectée par le circuit maître qui peut alors transmettre l'octet suivant et ainsi de suite jusqu'à la fin de la transmission. Pour cette transmission du ou des octets suivants, le circuit maître rebascule l'état de son port relié au fil 21 SDA pour imposer cet état (signal S/R en position S).

Une fois l'octet de données transmis et l'accusé réception ACK reçu du circuit esclave, le circuit maître impose une condition d'arrêt (STOP) en commutant le signal SDA à l'état haut (instant t₁₉) alors que le signal SCL est lui-même à l'état haut.

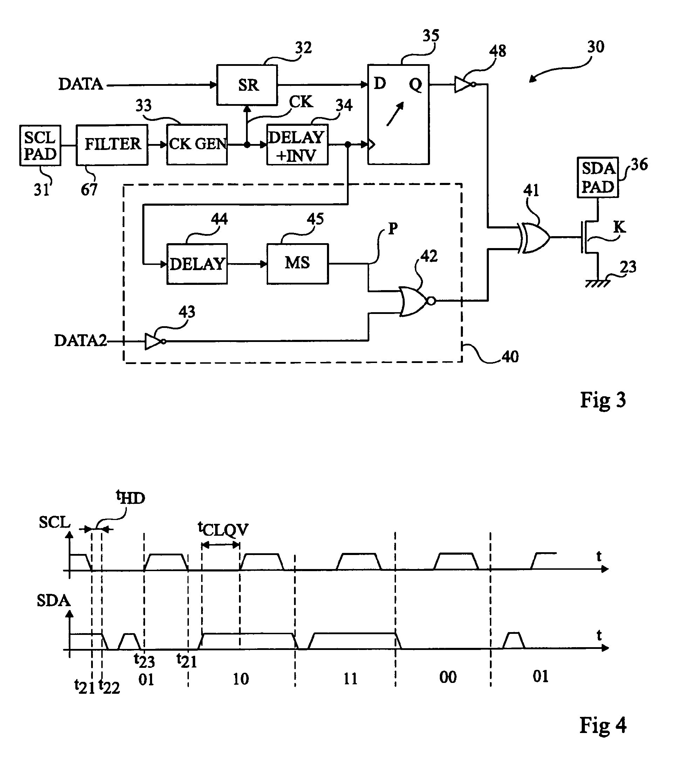

La figure 3 est un schéma blocs d'un circuit d'émission 30 qui comporte un dispositif maître pour envoyer des données sur un bus I2C. Pour simplifier la représentation de la figure 3, seuls les éléments constitutifs du circuit pilotant le fil 21 (plot 36 - SDA PAD) ont été représentés, les autres constituants du dispositif maître sont usuels, notamment les éléments générant le signal de synchronisation SCL imposé sur le plot 31 (SCL PAD) du circuit 30 connecté au fil 22. Le signal DATA de données à transmettre, généré par d'autres circuits (non représentés) du dispositif maître, est transmis à un registre à décalage 32 (SR) déclenché par un signal CK d'horloge interne CK généré par un circuit 33 (CK GEN) à partir du signal SCL. En pratique, le signal SCL est filtré et mis en forme (bloc 67, FILTER) avant d'arriver au circuit 33. Le signal CK sert non seulement de signal déclencheur du registre à décalage 32 mais également, après avoir traversé un élément retardateur et inverseur 34 (DELAY + INV), à déclencher une bascule 35 active sur fronts montants. La bascule 35 reçoit, sur son entrée de données D, la sortie du registre à décalage 32 et fournit, sur sa sortie directe Q, un signal de commande à destination d'un interrupteur K (par exemple, un transistor MOS) susceptible de tirer à la masse le plot 36 de connexion au fil 21.

Les éléments qui viennent d'être décrits correspondent à ceux d'un circuit d'émission usuel et permettent de fournir les chronogrammes de la figure 2. Typiquement, le circuit retardateur 34 maintient la donnée en sortie de la bascule 35 pendant une durée déterminée après le front descendant du signal SCL.

Dans l'exemple représenté en figure 3, le circuit d'émission comporte en outre un circuit 40 apte à superposer un deuxième canal de communication sur le bus I2C. Pour cela, la borne de commande de l'interrupteur K reçoit la sortie d'une fonction logique 41 de type OU-Exclusif (XOR) dont une première entrée reçoit l'inverse (inverseur 48) de la sortie Q de la bascule 35 et dont une deuxième entrée est reliée à la sortie du circuit 40. Cette sortie correspond à la sortie d'une fonction logique 42 de type NON-OU (NOR) combinant l'inverse (inverseur 43) d'un signal de données DATA2 à transmettre avec un signal déclencheur P. Ce signal déclencheur P est un signal impulsionnel généré à partir du signal CK au moyen d'un circuit retardateur 44 (DELAY) et d'un circuit monostable 45 (MS). Le rôle du circuit 44 est de fixer un délai d'apparition d'une impulsion correspondant à un codage de la donnée du canal secondaire après la fourniture de la donnée principale du bus I2C. Le circuit monostable 45 détermine la durée de l'impulsion secondaire. Enfin, la porte 41 mélange les données DATA du bus I2C aux données DATA2 du canal secondaire.

La figure 4 représente des chronogrammes illustrant un exemple d'allures de signaux SCL et SDA imposés par un circuit 30 du type de celui illustré en figure 3. Dans l'exemple de la figure 4, le signal SCL a été représenté avec un rapport cyclique différent de 1/2.

La figure 4 illustre quatre exemples 01, 10, 11, 00, de combinaisons possibles entre le signal de données (état 1 ou 0) du bus I2C et le signal (état 1 ou 0) du canal secondaire. Les données du canal secondaire sont codées sous la forme d'un signal impulsionnel généré en dehors de la période (état haut du signal SCL - instants t₂₃ à t₂₁) de validation du signal principal de données.

Le protocole I2C prévoit des fenêtres temporelles à partir du front descendant du signal de synchronisation SCL. Typiquement, une durée t_{HD} (d'environ 200 ns pour un protocole à 400 kHz) fixe un intervalle minimum entre le front descendant du signal SCL (instant t₂₁) et l'apparition du codage de la donnée suivante, et une durée maximum T_{CLQV} (d'environ 900 ns dans l'exemple ci-dessus) entre la présentation de la donnée (instant t₂₂) et le front montant suivant (instant t₂₃) du signal SCL. La durée minimale des paliers bas du signal SCL est également fixée (environ 1300 ns dans l'exemple ci-dessus). L'intervalle (instants t₂₂ à t₂₃) entre l'apparition du codage et le front montant du signal SCL laisse un intervalle libre dans le protocole I2C. On code le canal secondaire pendant les périodes où le signal de synchronisation SCL est à l'état bas (en ayant respecté la durée t_{HD}). Dans l'exemple représenté, si une impulsion (succession d'un état bas puis d'un état haut) est présente, cela correspond à transmettre un état 1 sur le deuxième canal. Si aucune impulsion n'est présente, cela correspond à transmettre un état bas sur ce second canal.

On tire ainsi profit de l'existence d'une période inexploitée dans le bus I2C. Typiquement, dans un protocole I2C à une fréquence de 400 kHz, une période de 700 ns entre les instants t₂₂ et t₂₃ où l'état du signal SDA n'est pas pris en compte par les récepteurs du protocole I2C. Cette période est mise à profit pour la transmission impulsionelle du deuxième canal.

Les circuits esclaves sont adaptés pour détecter ces signaux impulsionnels.

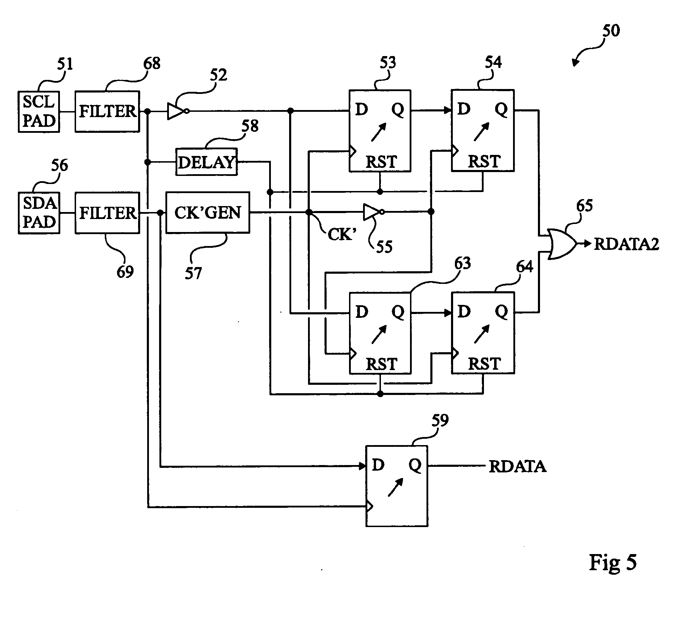

La figure 5 est un schéma blocs d'un exemple de réalisation d'un circuit 50 de réception côté dispositif esclave. Pour simplifier la description, seule la partie réception a été illustrée, la partie émission d'un bit d'accusé réception du canal I2C restant usuelle.

De façon habituelle pour un protocole I2C, le signal prélevé sur un plot 51 (SCL PAD) connecté au fil 22 est filtré et mis en forme (bloc 68, FILTER) pour être fourni en entrée d'horloge d'une bascule 59 dont l'entrée de donnée D est reliée, par l'intermédiaire d'un filtre et circuit de mise en forme (bloc 69, FILTER), à un plot 56 (SDA PAD) destiné à être relié au fil 21. La sortie Q de la bascule 59 active sur fronts montants fournit le signal RDATA correspondant au bus I2C décodé.

Pour décoder les données du deuxième canal, la sortie du filtre 68 est inversée (inverseur 52) pour être fournie en entrée de données D d'une bascule 53. La sortie Q de la bascule 53 est envoyée en entrée de données D d'une bascule 54. Les bascules 53 et 54 sont actives sur fronts montants et sont respectivement déclenchées par les fronts montants d'un signal déclencheur CK' et par les fronts descendants (inverseur 55) de ce signal CK'. En variante, la bascule 54 est active sur fronts descendants. Les bascules 53 et 54 sont réinitialisées (RST) par les fronts montants du signal SCL filtré et retardé (bloc 58, DELAY). Le signal déclencheur CK' est extrait du signal SDA par un générateur d'horloge 57 (CK'GEN) dont une entrée est reliée en sortie du filtre 69. Le signal de sortie de l'inverseur 52 est également envoyé en entrée de données D d'une bascule 63 dont la sortie Q est reliée en entrée de données D d'une autre bascule 64. Les bascules 63 et 64 sont toutes deux actives sur fronts montants et sont respectivement déclenchées par l'inverse (sortie de l'inverseur 55) du signal CK' et par ce signal CK'. Comme pour les bascules 53 et 54, les bascules 63 et 64 sont réinitialisées en retard par rapport à chaque front montant du signal CK'.

Le rôle des bascules 53 et 54 est de détecter une transition 010 sur le signal SDA quand le signal SCL est à l'état bas.

Le rôle des bascules 63 et 64 est de détecter une transition 101 sur le signal SDA quand le signal SCL est à l'état bas.

Les sorties Q des bascules 54 et 64 sont combinées par une fonction 65 de type OU pour fournir un signal RDATA2 représentant le deuxième canal de communication. En fait, la fonction 65 détecte un état haut sur le canal secondaire.

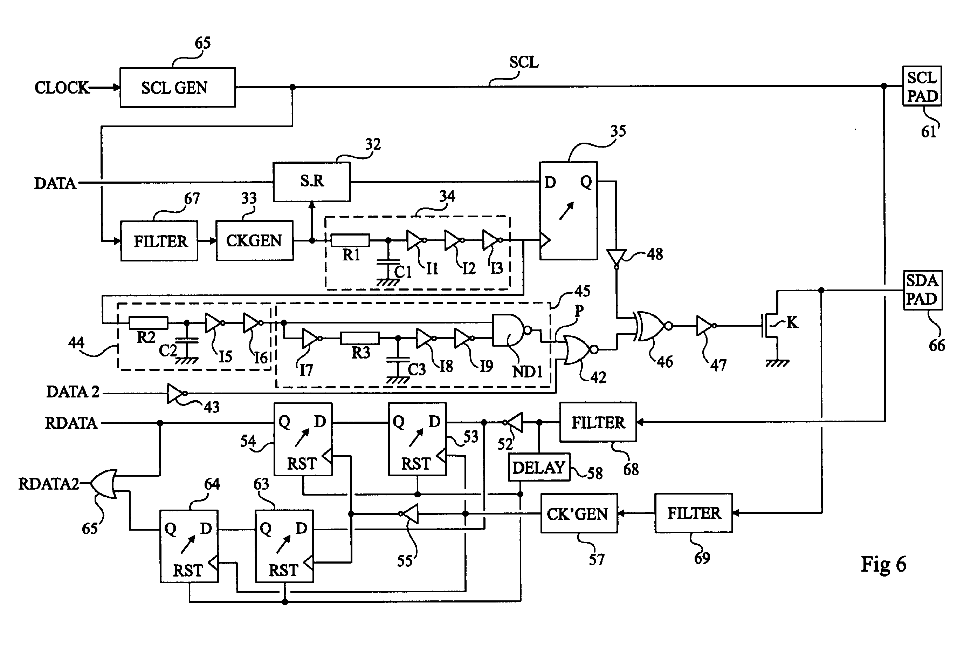

La figure 6 est un exemple de circuit électronique comportant un circuit d'émission et un circuit de réception du bus I2C. Il est fréquent qu'un même dispositif connecté au bus puisse émettre (se comporter en maître) et recevoir (se comporter en esclave). Le dispositif peut alors comporter des ports distincts reliés à ses circuits d'émission et de réception. Selon un autre exemple illustré par la figure 6, de mêmes ports 61 (SCL PAD) et 66 (SDA PAD) sont alternativement dédiés à la réception ou à l'émission.

Quand le dispositif fonctionne en maître, il génère à partir d'un signal d'horloge CLOCK (par exemple, son horloge interne), le signal de synchronisation SCL au moyen d'un générateur 65 (SCL GEN). Comme cela a été décrit en relation avec la figure 3, ce signal SCL sert à générer le signal déclencheur CK des circuits d'émission. Par rapport à la représentation de la figure 3, la figure 6 illustre un exemple de circuits détaillés des éléments retardateurs 34, 44 et monostable 45 ainsi qu'une variante des fonctions logiques.

Le circuit retardateur 34 est constitué d'une cellule résistive et capacitive (résistance série R1 et condensateur C1 relié à la masse), et de trois inverseurs en série I1, I2 et I3. Les dimensions à donner au circuit retardateur dépendent de l'application et de la fréquence de transmission du protocole I2C. En reprenant l'exemple d'un bus I2C à 400 kHz, ce circuit 34 assure le maintien de la donnée DATA environ 200 ns après le front descendant du signal SCL.

Le circuit retardateur 44 est formé d'un circuit résistif et capacitif (résistance série R2 et condensateur C2 relié à la masse), et de deux inverseurs en série I5 et I6 qui déterminent le délai d'apparition de l'impulsion du signal secondaire après la sortie de la donnée du bus I2C.

Le circuit monostable 45 comporte une cellule résistive et capacitive (résistance série R3 et condensateur C3 relié à la masse) et trois inverseurs I7, I8 et I9 en série. Dans l'exemple représenté, un premier inverseur I7 est en amont de la cellule R3-C3. Le circuit 45 comporte en outre une porte ND1 de type NON-ET dont une première entrée reçoit la sortie du dernier inverseur I9 et dont une deuxième entrée reçoit directement la sortie du dernier inverseur I6 du circuit retardateur 44. La porte 41 de la figure 3 est remplacée par une porte NON-OU Exclusif 46 suivie d'un inverseur 47.

Quand le circuit fonctionne en esclave, les plots 61 et 66, respectivement reliés en entrée des deux filtres 68 et 69, reçoivent les signaux provenant du circuit maître. L'exemple de circuit de réception de la figure 6 correspond à celui de la figure 3.

Pour réaliser un circuit susceptible de ne fonctionner qu'en esclave (par exemple, une mémoire EEPROM), le générateur 65 et son entrée CLOCK sont omis, le signal SCL étant tout le temps extrait du plot 61.

Divers modes de réalisation ont été décrits. Diverses variantes et modifications apparaîtront à l'homme de l'art. En particulier, les états pris pour exemple pourront être inversés selon le protocole utilisé. De plus, la mise en oeuvre pratique de l'invention est à la portée de l'homme du métier à partir des indications fonctionnelles données ci-dessus. En particulier, les exemples de circuit d'entrée et de sortie pourront être modifiés ou réalisés par des fonctions logicielles.

## Revendications

1. Procédé de transmission multi-canal sur un bus bifilaire comportant un signal de données (SDA) et un signal de synchronisation (SCL), des données d'un premier canal étant transmise par un codage d'état du signal de données pendant une période incluant un premier état du signal de synchronisation, **caractérisé en ce que** des données d'un deuxième canal sont transmises par codage impulsionnel hors de ladite période.

2. Procédé selon la revendication 1, dans lequel un premier état du deuxième canal est codé par une impulsion, un deuxième état du deuxième canal étant codé par une absence d'impulsion.

3. Procédé selon la revendication 1 ou 2, appliqué au protocole I2C.

4. Procédé selon la revendication 3, dans lequel ladite impulsion est générée pendant une période comprise entre un temps de maintien qui fait suite à un front d'un premier type du signal de synchronisation et un front d'un deuxième type qui suit.

5. Système de transmission multi-canal sur un bus bifilaire, **caractérisé en ce qu'**il comporte :
des moyens de transmission d'un premier canal respectant le protocole I2C ; et
des moyens de transmission d'un deuxième canal impulsionnel hors de périodes où les données du protocole I2C sont stables.

6. Emetteur d'un système conforme à la revendication 5.

7. Récepteur d'un système conforme à la revendication 5.

8. Emetteur-récepteur d'un système selon la revendication 5.

## Claims

1. A method of multichannel transmission over a twin-wire bus comprising a data signal (SDA) and a synchronization signal (SCL), data of a first channel being transmitted by a state coding of the data signal for a time period comprising a first state of the synchronization signal, **characterized in that** data of a second channel are transmitted by pulse coding outside of said period.

2. The method of claim 1, wherein a first state of the second channel is coded by a pulse, a second state of the second channel being coded by the absence of a pulse.

3. The method of claim 1 or 2, applied to the I2C protocol.

4. The method of claim 3, wherein said pulse is generated for a time period comprised between a hold time which follows an edge of a first type of the synchronization signal and a following edge of a second type.

5. A system of multichannel transmission over a twin-wire bus, comprising:
means for transmitting a first channel respecting the I2C protocol; and
means for transmitting a second pulse channel outside of periods when the I2C protocol data are stable.

6. A transmitter of the system of claim 5.

7. A receiver of the system of claim 5.

8. A transceiver of the system of claim 5.

## Patentansprüche

1. Verfahren zur Mehrkanalübertragung über einen doppeladrigen Bus, die ein Datensignal (SDA) und ein Synchronisationssignal (SCL) aufweist, wobei Daten eines ersten Kanals übertragen werden durch eine Zustandscodierung des Datensignals für eine Zeitperiode, die einen ersten Zustand des Synchronisationssignals aufweist, **dadurch gekennzeichnet, dass** die Daten eines zweiten Kanals durch Pulscodierung außerhalb der Periode übertragen werden.

2. Verfahren nach Anspruch 1, wobei ein erster Zustand des zweiten Kanals durch einen Impuls codiert wird, wobei ein zweiter Zustand des zweiten Kanals durch die Abwesenheit eines Impulses codiert wird.

3. Verfahren nach Anspruch 1 oder 2, wobei das Verfahren auf das I2C-Protokoll angewendet wird.

4. Verfahren nach Anspruch 3, wobei der Impuls für eine Zeitperiode erzeugt wird, die zwischen einer Haltezeit, folgend einer Kante eines ersten Typs des Synchronisationssignals und einer Folgekante eines zweiten Typs liegt.

5. System zur Mehrkanalübertragung über einen doppeladrigen Bus, wobei das System folgendes aufweist:
Mittel zum Übertragen eines ersten Kanals gemäß dem I2C-Protokoll; und
Mittel zum Übertragen eines zweiten Impulskanals außerhalb der Perioden in denen die I2C-Protokolldaten stabil sind.

6. Ein Transmitter des Systems nach Anspruch 5.

7. Ein Empfänger des Systems nach Anspruch 5.

8. Ein Sendeempfänger des Systems nach Anspruch 5.
